# EUROPÄISCHE PATENTSCHRIFT

(11) **EP 0 421 209 B1**
(45) Veröffentlichungstag und Bekanntmachung des Hinweises auf die Patenterteilung: **21.06.1995**
(21) Anmeldenummer: 90118227.9
(22) Anmeldetag: 22.09.1990
(51) Int. Cl.: C08F 10/00, C08F 4/602

(54) **Verfahren zur Herstellung eines Polyolefins**
Process for preparing a polyolefin
Procédé de préparation d'une polyoléfine

(30) Priorität: 27.09.1989 DE 3932181
(43) Veröffentlichungstag der Anmeldung: 10.04.1991
(73) Patentinhaber: HOECHST AKTIENGESELLSCHAFT, 65926 Frankfurt am Main (DE)
(72) Erfinder: Dolle, Volker, Dr., D-6233 Kelkheim (Taunus) (DE); Winter, Andreas, Dr., D-6233 Kelkheim (Taunus) (DE)

(56) Entgegenhaltungen:
- EP-A- 0 302 424
- EP-A- 0 317 955
- J.Am.Chem.Soc.1988,110,6255-6256

## Beschreibung

Die Erfindung bezieht sich auf ein Olefinpolymer mit hoher Molmasse und geringem Katalysatorrestgehalt.

Die Herstellung von isotaktischem PP gelingt mit Hilfe des Ethylen-bis-(4,5,6,7-tetrahydro-1-indenyl)-zirkondichlorids zusammen mit einem Aluminoxan in einer Suspensionspolymerisation (vgl. EP-A 185 918). Das Polymer besitzt eine enge Molmassenverteilung (M_{w}/Mₙ 1,6 bis 2,6).

Durch eine spezielle Voraktiverungsmethode konnte eine beträchtliche Steigerung der Aktivität des Katalysatorsystems erzielt werden (vgl. DE 3 726 067). Die Kornmorphologie des Polymeren wurde ebenfalls durch diese Voraktivierungsmethode verbessert.

"Aus EP 317 955 ist ein Verfahren zur Herstellung von Aluminoxanen bekannt, bei dem eine Lösung einer Aluminium-Kohlenwasserstoff-Verbindung mit einem fein verteilten Wasserstrahl in Kontakt gebracht wird.

Aus EP 302 424 und J. Am. Chem. Soc. 1988,110, 6255-6256 sind Verfahren zur Herstellung von Olefinpolymeren bekannt, bei denen ein Katalysator bestehend aus einem Metallocen und einem Alkylaluminoxan eingesetzt wird."

Die Isotaxie (oder Syndiotaxie) der Polyolefine kann durch Wahl der Polymerisationstemperatur (vgl. DE 38 26 075) oder des Katalysators eingestellt werden (vgl. DE 38 26 075, DE 37 26 067). Für bestimmte Polymerisationsverfahren ist jedoch die Beeinflussung der Iso- (oder Syndiotaxie) durch eine weitere Komponente wünschenswert.

Es bestand somit die Aufgabe, ein Verfahren zur Herstellung eines hochmolekularen Olefinpolymers zu finden, welches in einem technisch interessanten Temperaturbereich mit großer Katalysatoraktivität durchführbar ist und es erlaubt, die Isotaxie oder Syndiotaxie einfach zu steuern.

Es wurde gefunden, daß die Aufgabe durch Polymerisation von Olefinen in Gegenwart bestimmter Metallocen-Katalysatoren und bestimmter Aktivatoren gelöst werden kann.

Die Erfindung betrifft somit ein Verfahren zur Herstellung eines Polyolefins durch Polymerisation eines Olefins der Formel R^{a}-CH=CH-R^{b}, worin R^{a} und R^{b} gleich oder verschieden sind und ein Wasserstoffatom oder einen C₁-C₁₄-Alkylrest bedeuten oder R^{a} und R^{b} mit dem sie verbindenden C-Atom einen Ring mit 4 bis 28 C-Atomen bilden, bei einer Temperatur von 0°C bis 150°C, bei einem Druck von 0,5 bis 100 bar, in Lösung, in Suspension oder in der Gasphase, in Gegenwart eines Katalysators, welcher aus einem Metallocen und einem Aluminoxan besteht, dadurch gekennzeichnet, daß das Aluminoxan eine Verbindung der Formel (I) 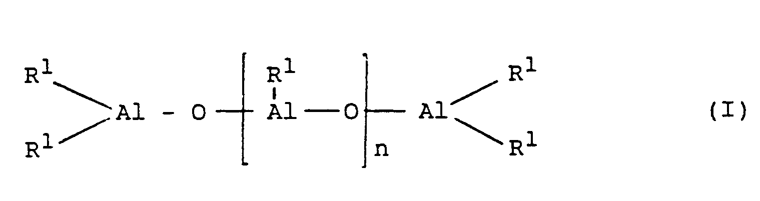
für den linearen Typ und/oder der Formel (II) 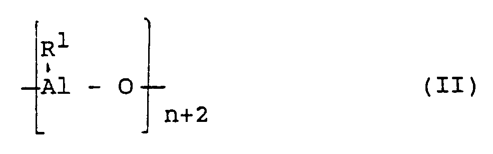
für den cyclischen Typ ist, wobei in den Formeln (I) und (II) R¹ eine C₁-C₆-Alkylgruppe oder ein Wasserstoffatom bedeutet und n eine ganze Zahl von 2 bis 50 ist, wobei 0,01 bis 40 % der Reste R¹ Wasserstoffatome sind.

Der für das erfindungsgemäße Verfahren zu verwendende Katalysator besteht aus einem Metallocen und einem Aluminoxan der Formel (I) 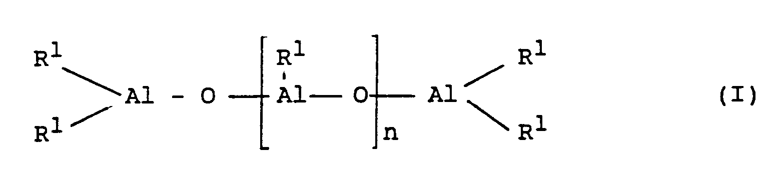
für den linearen Typ und/oder der Formel (II) 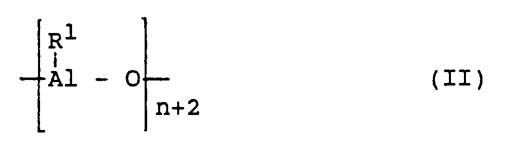
für den cyclischen Typ. In diesen Formeln bedeuten R¹ eine C₁-C₆-Alkylgruppe, vorzugsweise Methyl, Ethyl oder Isobutyl, insbesondere Methyl, und n eine ganze Zahl von 2 bis 50, bevorzugt 5 bis 40 oder ein Wasserstoffatom. Dabei sind 0,01 bis 40 %, vorzugsweise 0,01 bis 35 % der Reste R¹ Wasserstoffatome. Die exakte Struktur des Aluminoxans ist jedoch nicht bekannt.

Das Aluminoxan kann auf verschiedene Art und Weise hergestellt werden.

Eine Möglichkeit ist die vorsichtige Zugabe von Wasser zu einer verdünnten Lösung eines Aluminiumdialkylhydrids, indem die Lösung des Aluminiumdialkylhydrids, vorzugsweise Aluminiumdimethylhydrid, und das Wasser jeweils in kleinen Portionen in eine vorgelegte größere Menge eines inerten Lösemittels eingetragen werden und zwischendurch das Ende der Gasentwicklung jeweils abgewartet wird.

Bei einem anderen Verfahren wird fein gepulvertes Kupfersulfatpentahydrat in Toluol aufgeschlämmt und in einem Glaskolben unter Inertgas bei etwa -20 °C mit soviel Aluminiumdialkylhydrid versetzt, daß für je 4 Al-Atome etwa 1 mol CuSO₄·5H₂O zur Verfügung steht. Nach langsamer Hydrolyse unter Alkan- und Wasserstoff-Abspaltung wird die Reaktionsmischung 24 bis 48 Stunden bei Zimmertemperatur belassen, wobei gegebenenfalls gekühlt werden muß, damit die Temperatur nicht über 30°C ansteigt. Anschließend wird das im Toluol gelöste Aluminoxan von dem Kupfersulfat abfiltriert und die Lösung im Vakuum eingeengt. Es wird angenommen, daß bei diesem Herstellungsverfahren die niedermolekularen Aluminoxane zu höheren Oligomeren kondensieren. Die Lösung kann auch als solche verwendet werden.

Weiterhin erhält man Aluminoxane, wenn man bei einer Temperatur von -20 bis 100 °C in einem inerten aliphatischen oder aromatischen Lösemittel, vorzugsweise Heptan oder Toluol, gelöstes Aluminiumdialkylhydrid, vorzugsweise Aluminiumdimethylhydrid, mit kristallwasserhaltigen Aluminiumsalzen, vorzugsweise Aluminiumsulfat, zur Reaktion bringt. Dabei beträgt das Volumenverhältnis zwischen Lösemittel und dem verwendeten Aluminiumalkylhydrid 1:1 bis 50:1 - vorzugsweise 5:1 - und die Reaktionszeit, die durch Abspaltung des Alkans kontrolliert werden kann, 1 bis 200 Stunden - vorzugsweise 10 bis 40 Stunden.

Von den kristallwasserhaltigen Aluminiumsalzen werden insbesondere jene verwendet, die einen hohen Gehalt an Kristallwasser aufweisen. Besonders bevorzugt ist Aluminiumsulfat-Hydrat, vor allem die Verbindungen Al₂(SO₄)₃·16H₂O und Al₂(SO₄)₃·18H₂O mit dem besonders hohen Kristallwassergehalt von 16 bzw. 18 mol H₂O/mol Al₂(SO₄)₃.

Eine weitere Variante zur Herstellung von Aluminoxanen besteht darin, Aluminiumdialkylhydrid, vorzugsweise Aluminiumdimethylhydrid, in dem im Polymerisationskessel vorgelegten Suspensionsmittel, vorzugsweise im flüssigen Monomeren, in Heptan oder Toluol, zu lösen und dann die Aluminiumverbindung mit Wasser umzusetzen.

Neben den zuvor geschilderten Verfahren zur Herstellung von Aluminoxanen gibt es weitere, welche brauchbar sind.

Als Metallocen sind verschiedene Verbindungen dieses Typs verwendbar, beispielsweise Verbindungen der Formel III

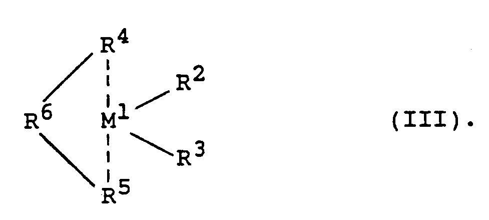

In Formel III ist M¹ ein Metall aus der Gruppe Titan, Zirkon, Hafnium, Vanadium, Niob, Tantal und Chrom, vorzugsweise Zirkon und Hafnium.

R² und R³ sind gleich oder verschieden und bedeuten ein Wasserstoffatom, eine C₁-C₁₀-, vorzugsweise C₁-C₃-Alkylgruppe, eine C₁-C₁₀-, vorzugsweise C₁-C₃-Alkoxygruppe, eine C₆-C₁₀-, vorzugsweise C₆-C₈-Arylgruppe, eine C₆-C₁₀-, vorzugsweise C₆-C₈-Aryloxygruppe, eine C₂-C₁₀-, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe oder ein Halogenatom, vorzugsweise Chlor.

R⁴ und R⁵ sind verschieden und bedeuten einen ein- oder mehrkernigen Kohlenwasserstoffrest, welcher mit dem Zentralatom M¹ eine Sandwichstruktur bilden kann.

Bevorzugt sind R⁴ und R⁵ Fluorenyl und Cyclopentadienyl, wobei die Grundkörper noch zusätzliche Substituenten tragen können.

R⁶ ist eine ein- oder mehrgliedrige Brücke, welche die Reste R⁴ und R⁵ verknüpft und bedeutet 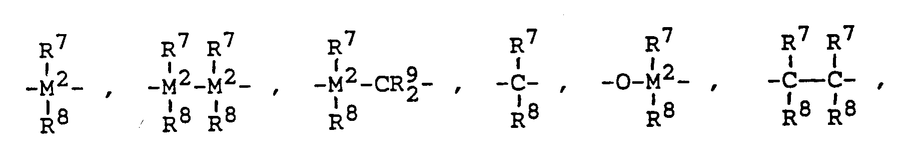
= BR⁷, = AlR⁷, -Ge-, -Sn-, -O-, -S-,= SO, = SO₂, = NR⁷, = CO, = PR⁷ oder = P(O)R⁷ ist, wobei R⁷, R⁸ und R⁹ gleich oder verschieden sind und ein Wasserstoffatom, ein Halogenatom, vorzugsweise Chlor, eine C₁-C₁₀-, vorzugsweise C₁-C₃-Alkylgruppe, insbesondere Methylgruppe, eine C₁-C₁₀-Fluoralkylgruppe, vorzugsweise CF₃-Gruppe, eine C₆-C₁₀-Fluorarylgruppe, vorzugsweise Pentafluorphenylgruppe, eine C₆-C₁₀-, vorzugsweise C₆-C₈-Arylgruppe, eine C₁-C₁₀-, vorzugsweise C₁-C₄-Alkoxygruppe, insbesondere Methoxygruppe, eine C₂-C₁₀-, vorzugsweise C₂-C₄-Alkenylgruppe, eine C₇-C₄₀- vorzugsweise C₇-C₁₀-Arylalkylgruppe, eine C₈-C₄₀-, vorzugsweise C₈-C₁₂-Arylalkenylgruppe oder eine C₇-C₄₀-, vorzugsweise C₇-C₁₂-Alkylarylgruppe bedeuten, oder R⁶ und R⁷ oder R⁶ und R⁸ bilden jeweils zusammen mit den sie verbindenden Atomen einen Ring.

M² ist Silizium, Germanium oder Zinn, bevorzugt Silizium oder Germanium.

R⁶ ist vorzugsweise =CR⁷R⁸, -SiR⁷R⁸, =GeR⁷R⁸, -O-, -S-, =SO, =PR⁷ oder =P(O)R⁷.

Die vorstehend beschriebenen Metallocene können nach folgendem allgemeinen Reaktionsschema hergestellt werden: 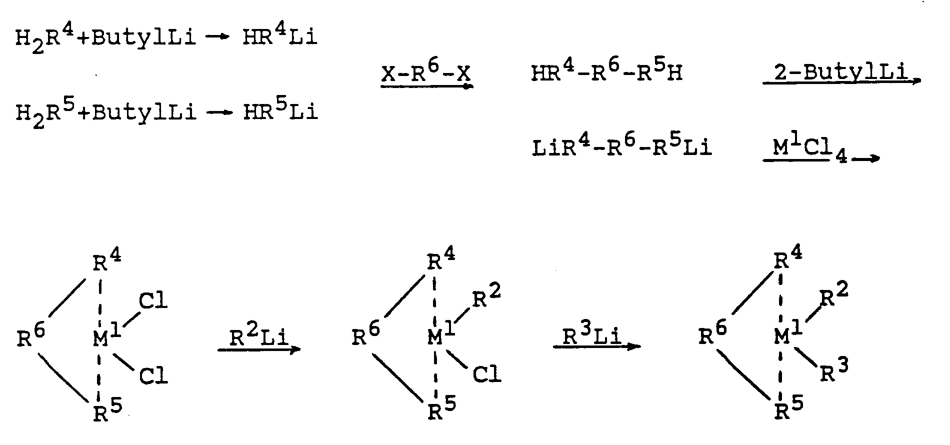
(X = Cl, Br, J, O-Tosyl)
oder

H₂R⁴ + ButylLi → HR⁴Li

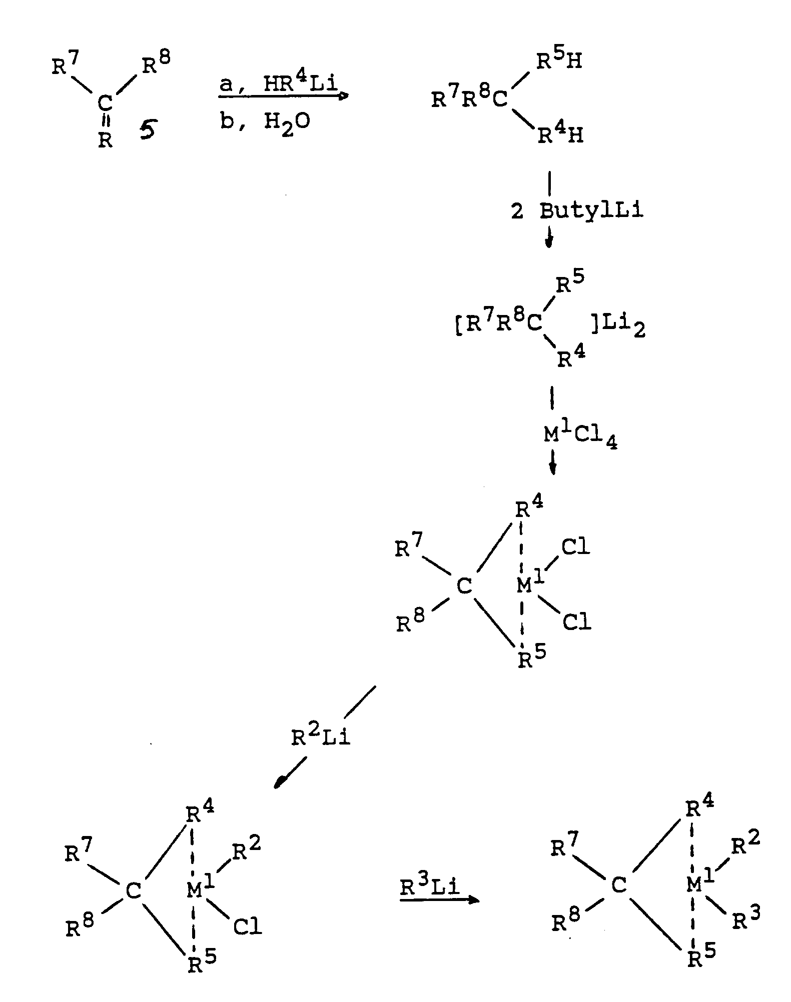

Geeignete Metallocene sind beispielsweise Bisindenyl-ethylen-zirkondichlorid, Bisindenyl-ethylen-hafniumdichlorid, Bisindenyl-dimethylsilylen-zirkondichlorid, Bisindenyl-dimethylsilylen-hafniumdichlorid, ferner (Arylalkyliden)(9-fluorenyl)(cyclopentadienyl)zirkondichlorid, (Diarylmythylen)(9-fluorenyl)(cyclopentadienyl)zirkondichlorid und (Dialkylmethylen)(9-fluorenyl)(cyclopentadienyl)zirkondichlorid, sowie die entsprechenden Hafniumverbindungen.

Es ist möglich, das Metallocen vor dem Einsatz in der Polymerisationsreaktion mit einem Aluminoxan der Formel (I) und/oder (II) vorzuaktivieren. Dadurch wird die Polymerisationsaktivität deutlich erhöht und die Kornmorphologie verbessert.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff.

Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von 10⁻⁴ - 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78 °C bis 100 °C, vorzugsweise 0 bis 70°C.

Die Polymerisation wird in bekannter Weise in Lösung, in Suspension oder in der Gasphase, kontinuierlich oder diskontinuierlich, ein- oder mehrstufig bei einer Temperatur von 30 bis 150 °C, vorzugsweise 30 bis 80 °C, durchgeführt. Polymerisiert werden Olefine der Formel R^{a}-CH=CH-R^{b}. In dieser Formel sind R^{a} und R^{b} gleich oder verschieden und bedeuten ein Wasserstoffatom oder einen Alkylrest mit 1 bis 28 C-Atomen. R^{a} und R^{b} können jedoch auch mit den sie verbindenden C-Atomen einen Ring mit 4 bis 28 C-Atomen bilden. Beispiele für solche Olefine sind Ethylen, Propylen, 1-Buten, 1-Hexen, 4-Methyl-1-penten, 1-Octen, Norbornen, Norbornadien, Penten, Hexen oder Octen. Insbesondere wird Propylen polymerisiert.

Als Molmassenregler wird, falls erforderlich, Wasserstoff zugegeben. Der Gesamtdruck im Polymerisationssystem beträgt 0,5 bis 100 bar. Bevorzugt ist die Polymerisation in dem technisch besonders interessanten Druckbereich von 5 bis 64 bar.

Dabei wird die Metallocenverbindung in einer Konzentration, bezogen auf das Übergangsmetall, von 10⁻³ bis 10⁻⁷, vorzugsweise 10⁻⁴ bis 10⁻⁶ mol Übergangsmetall pro dm³ Lösemittel bzw. pro dm³ Reaktorvolumen angewendet. Das Aluminoxan wird in einer Konzentration von 10⁻⁵ bis 10⁻¹ mol, vorzugsweise 10⁻⁴ bis 10⁻² mol pro dm³ Lösemittel bzw. pro dm³ Reaktorvolumen verwendet. Prinzipiell sind aber auch höhere Konzentrationen möglich. Als Metallocen wird mindestens eine Verbindung der Formel III eingesetzt. Möglich sind auch Gemische mehrerer Verbindungen der Formel III oder Gemische von Isomeren.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Butan, Pentan, Hexan, Heptan, Isooctan, Cyclohexan, Methylcyclohexan genannt.

Weiterhin kann eine Benzin- bzw. hydrierte Dieselölfraktion benutzt werden. Brauchbar ist auch Toluol. Bevorzugt wird im flüssigen Monomeren polymerisiert.
Werden inerte Lösemittel verwendet, werden die Monomeren gasförmig oder flüssig zudosiert.
Wird nur ein Monomer als Suspensionsmittel verwendet, so wird das Comonomere, beziehungsweise werden die Comonomeren gasförmig oder flüssig zudosiert.
Des weiteren ist es möglich, in einer Mischung verschiedener Monomeren als Suspensionsmittel zu polymerisieren; ein weiteres Monomeres kann dann flüssig oder gasförmig zudosiert werden. Bei Verwendung von Ethylen ist es vorteilhaft, einen Teil des Ethylens vorzulegen und den Rest während der Polymerisation zuzudosieren.

Die Dauer der Polymerisation ist beliebig, da das erfindungsgemäß zu verwendende Katalysatorsystem einen nur geringen zeitabhängigen Abfall der Polymerisationsaktivität zeigt.

Das erfindungsgemäße Verfahren zeichnet sich dadurch aus, daß die verwendeten Metallocene sehr temperaturstabil sind, so daß sie mit hoher Aktivität auch bei Temperaturen bis 90°C eingesetzt werden können. Außerdem können die als Cokatalysatoren dienenden Aluminoxane in geringeren Konzentrationen als bisher zugesetzt werden. Schließlich ist es nunmehr möglich, statistische Copolymere bei technisch interessanten Temperaturen herzustellen.

Ein weiterer Vorteil des erfindungsgemäßen Verfahrens besteht darin, daß ein Gemisch von Methylaluminoxan und Hydridomethylaluminoxan die Möglichkeit bietet, die Isotaxie oder Syndiotaxie des Polymeren zu steuern.

Die nachfolgenden Beispiele sollen die Erfindung erläutern.
Es bedeuten
- VZ: = Viskositätszahl in cm³
- SI: = Syndiotaktischer Index, bestimmt durch ¹³C-NMR-Spektroskopie
- II: = Isotaktischer Index, bestimmt durch ¹³C-NMR-Spektroskopie

### Beispiel 1

Ein trockener 16 dm³ Kessel wurde mit Stickstoff gespült und mit 10 dm³ flüssigem Propylen befüllt. Dann wurden 68 cm³ toluolische Hydridomethylaluminoxan-Lösung (= HMAO, entsprechend 40 mmol Al, mittlerer Oligomerisierungsgrad n = 30) zugegeben und der Ansatz bei 30°C 15 Minuten gerührt.

Parallel dazu wurden 50 mg Bisindenyl-ethylen-hafnium-dichlorid in 34 cm³ MAO (= 20 mmol Al) gelöst und durch 15-minütiges Stehenlassen voraktiviert.

Diese Lösung wurde dann in den Kessel gegeben. Das Polymerisationssystem wurde auf eine Temperatur von 70°C gebracht und die Polymerisation startete. Die Polymerisation wurde nach 60 Minuten durch Abkühlen des Reaktors und Entspannen gestoppt.
Es wurden 0,16 kg Polypropylen erhalten. Die Aktivität betrug somit 3,2 kg PP/g Metallocen/h.

Am Polymeren wurden die folgenden analytischen Daten ermittelt:
VZ = 73 cm³/g, II = 92 %.

### Beispiel 2

Ein trockener 16 dm³ Kessel wurde mit Stickstoff gespült und mit 10 dm³ flüssigem Propylen befüllt. Dann wurden 68 cm³ toluolische Hydridomethylaluminoxan-Lösung (= HMAO, entsprechend 40 mmol Al, mittlerer Oligomerisierungsgrad n = 30) zugegeben und der Ansatz bei 30°C 15 Minuten gerührt.

Parallel dazu wurden 7 mg Bisindenyl-dimethylsilylen-zirkondichlorid in 15 cm³ MAO (= 20 mmol Al) gelöst und durch 15-minütiges Stehenlassen voraktiviert.

Diese Lösung wurde dann in den Kessel gegeben. Das Polymerisationssystem wurde auf eine Temperatur von 70°C gebracht und die Polymerisation startete. Die Polymerisation wurde nach 60 Minuten durch Abkühlen des Reaktors und Entspannen gestoppt.
Es wurden 0,88 kg Polypropylen erhalten. Die Aktivität betrug somit 126 kg PP/g Metallocen/h.

Am Polymeren wurden die folgenden analytischen Daten ermittelt:
VZ = 49 cm³/g, II = 85 %.

### Beispiel 3

Ein trockener 16 dm³ Kessel wurde mit Stickstoff gespült und mit 10 dm³ flüssigem Propylen befüllt. Dann wurden 68 cm³ toluolische Hydridomethylaluminoxan-Lösung (= HMAO, entsprechend 40 mmol Al, mittlerer Oligomerisierungsgrad n = 30) zugegeben und der Ansatz bei 30°C 15 Minuten gerührt.

Parallel dazu wurden 60 mg Fluorenyl-isopropyliden-cyclopentadienyl-hafnium-dichlorid in 34 cm³ HMAO (= 20 mmol Al) gelöst und durch 15-minütiges Stehenlassen voraktiviert.

Diese Lösung wurde dann in den Kessel gegeben. Das Polymerisationssystem wurde auf eine Temperatur von 60°C gebracht und die Polymerisation startete. Die Polymerisation wurde nach 60 Minuten durch Abkühlen des Reaktors und Entspannen gestoppt.
Es wurden 1,45 kg Polypropylen erhalten. Die Aktivität betrug somit 11,9 kg PP/g Metallocen/h.

Am Polymeren wurden die folgenden analytischen Daten ermittelt:
VZ = 519 cm³/g, SI = 92 %.

### Beispiel 4

Ein trockener 16 dm³ Kessel wurde mit Stickstoff gespült und mit 10 dm³ flüssigem Propylen befüllt. Dann wurden 68 cm³ toluolische Hydridomethylaluminoxan-Lösung (= HMAO, entsprechend 40 mmol Al, mittlerer Oligomerisierungsgrad n = 30) zugegeben und der Ansatz bei 30°C 15 Minuten gerührt.

Parallel dazu wurden 20 mg Fluorenyl-isopropyliden-cyclopentadienyl-zirkon-dichlorid in 34 cm² HMAO (= 20 mmol Al) gelöst und durch 15-minütiges Stehenlassen voraktiviert.

Diese Lösung wurde dann in den Kessel gegeben. Das Polymerisationssystem wurde auf eine Temperatur von 50°C gebracht und die Polymerisation startete. Die Polymerisation wurde nach 60 Minuten durch Abkühlen des Reaktors und Entspannen gestoppt.
Es wurden 0,68 kg Polypropylen erhalten. Die Aktivität betrug somit 34 kg PP/g Metallocen/h.

Am Polymeren wurden die folgenden analytischen Daten ermittelt:
VZ = 123 cm³/g, SI = 89 %.

## Patentansprüche

1. Verfahren zur Herstellung eines Polyolefins durch Polymerisation eines Olefins der Formel R^{a}-CH=CH-R^{b}, worin R^{a} und R^{b} gleich oder verschieden sind und ein Wasserstoffatom oder einen C₁-C₁₄-Alkylrest bedeuten oder R^{a} und R^{b} mit dem sie verbindenden C-Atom einen Ring mit 4 bis 28 C-Atomen bilden, bei einer Temperatur von 0°C bis 150°C, bei einem Druck von 0,5 bis 100 bar, in Lösung, in Suspension oder in der Gasphase, in Gegenwart eines Katalysators, welcher aus einem Metallocen und einem Aluminoxan besteht, dadurch gekennzeichnet, daß das Aluminoxan eine Verbindung der Formel (I) 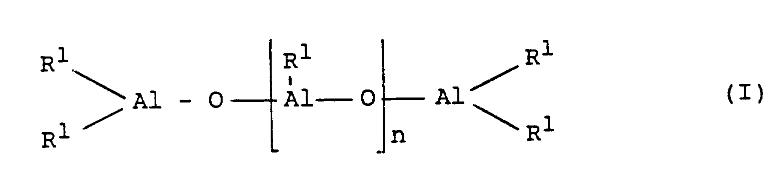 für den linearen Typ und/oder der Formel (II) 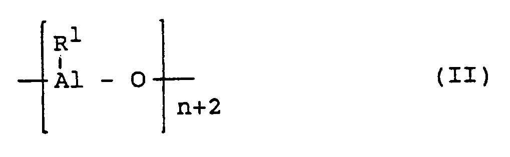 für den cyclischen Typ besteht, wobei in den Formeln (I) und (II) R¹ eine C₁-C₆-Alkylgruppe oder ein Wasserstoffatom bedeutet und n eine ganze Zahl von 2 bis 50 ist, wobei 0,01 bis 40 % der Reste R¹ Wasserstoffatome sind.

2. Verfahren nach Anspruch 1, dadurch gekennzeichnet, daß das Aluminoxan ein Gemisch ist aus Methylaluminoxan und einer Verbindung der Formel (I) 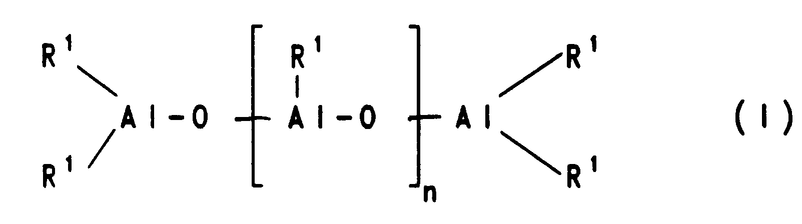 für den linearen Typ und/oder der Formel (II) 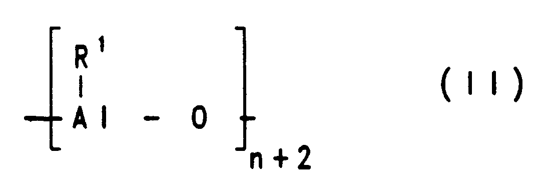 für den cyclischen Typ, wobei in den Formeln (I) und (II) R¹ eine Methylgruppe oder ein Wasserstoffatom bedeutet und n eine ganze Zahl von 2 bis 50 ist, wobei 0,01 bis 40 % der Reste R¹ Wasserstoffatome sind.

3. Verfahren zur Herstellung eines Polyolefins durch Polymerisation eines Olefins der Formel R^{a}-CH=CH-R^{b}, worin R^{a} und R^{b} gleich oder verschieden sind und ein Wasserstoffatom oder einen C₁-C₁₄-Alkylrest bedeuten oder R^{a} und R^{b} mit dem sie verbindenden C-Atom einen Ring mit 4 bis 28 C-Atomen bilden, bei einer Temperatur von 0°C bis 150°C, bei einem Druck von 0,5 bis 100 bar, in Lösung, in Suspension oder in der Gasphase, in Gegenwart eines Katalysators, welcher aus einem Metallocen und einem Aluminoxan besteht, dadurch gekennzeichnet, daß das Aluminoxan durch Hydrolyse eines Aluminiumdialkylhydrids erhalten wird.

## Claims

1. A process for the preparation of a polyolefin by polymerization of an olefin of the formula R^{a}-CH=CH-R^{b}, in which R^{a} and R^{b} are identical or different and are each a hydrogen atom or a C₁-C₁₄-alkyl radical or R^{a} and R^{b}, together with the carbon atom linking them, form a ring of 4 to 28 carbon atoms, at a temperature of 0°C to 150°C, at a pressure of 0.5 to 100 bar, in solution, in suspension or in the gas phase, in the presence of a catalyst consisting of a metallocene and an aluminoxane, characterized in that the aluminoxane is a compound of the formula (I) 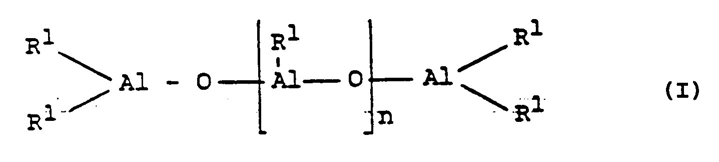 for the linear type and/or of the formula (II) 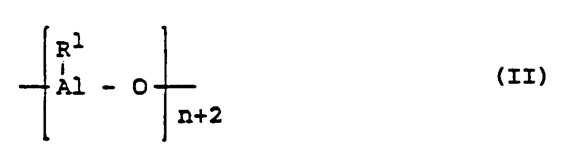 for the cyclic type, R¹ in the formulae (I) and (II) being a C₁-C₆-alkyl group or a hydrogen atom and n being an integer from 2 to 50, 0.01 to 40% of the radicals R¹ being hydrogen atoms.

2. The process as claimed in claim 1, characterized in that the aluminoxane is a mixture of methylaluminoxane and characterized in that the aluminoxane is a compound of the formula (I) 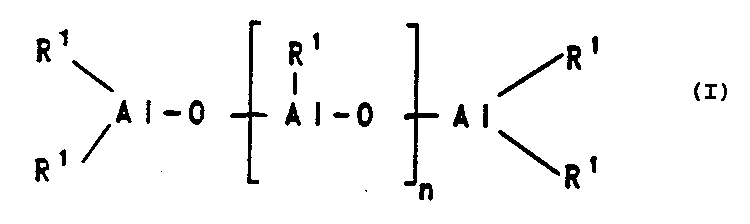 for the linear type and/or of the formula (II) 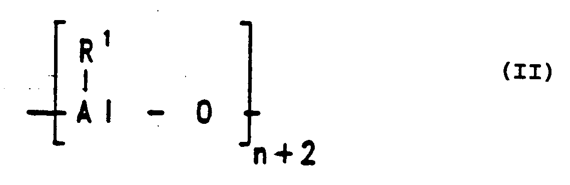 for the cyclic type, R¹ in the formulae (I) and (II) being a methyl group or a hydrogen atom and n being an integer from 2 to 50, 0.01 to 40% of the radicals R¹ being hydrogen atoms.

3. A process for the preparation of a polyolefin by polymerization of an olefin of the formula R^{a}-CH=CH-R^{b}, in which R^{a} and R^{b} are identical or different and are each a hydrogen atom or a C₁-C₁₄-alkyl radical or R^{a} and R^{b}, together with the carbon atom linking them, form a ring of 4 to 28 carbon atoms, at a temperature of 0°C to 150°C, at a pressure of 0.5 to 100 bar, in solution, in suspension or in the gas phase, in the presence of a catalyst consisting of a metallocene and an aluminoxane, characterized in that the aluminoxane is obtained by hydrolysis of an aluminum dialkyl hydride.

## Revendications

1. Procédé de préparation d'une polyoléfine par polymérisation d'une oléfine de formule R^{a}-CH=CH-R^{b}, dans laquelle R^{a} et R^{b} sont identiques ou différents et signifient un atome d'hydrogène ou un reste d'alkyle en C₁-C₁₄ ou R^{a} et R^{b} forment un cycle, ayant de 4 à 28 atomes de carbone, avec l'atome de carbone auquel ils sont liés, à une température comprise entre 0°C et 150°C, sous une pression comprise entre 0,5 et 100 bars, en solution, en suspension ou en phase gazeuse, en présence d'un catalyseur, qui consiste en un métallocène et un aluminoxane, **caractérisé** en ce que l'aluminoxane consiste en un composé de formule (I) 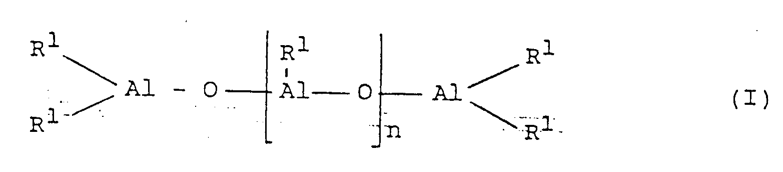 pour le type linéaire et/ou de formule (II) 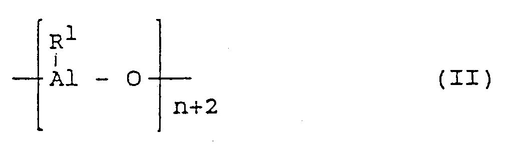 pour le type cyclique, dans les formules (I) et (II), R¹ signifiant un groupe alkyle en C₁-C₆ ou un atome d'hydrogène et n étant un nombre entier compris entre 2 et 50, de 0,01 à 40 % des restes R¹ étant des atomes d'hydrogène.

2. Procédé selon la revendication 1, **caractérisé** en ce que l'aluminoxane est un mélange de méthylaluminoxane et d'un composé de formule (I) 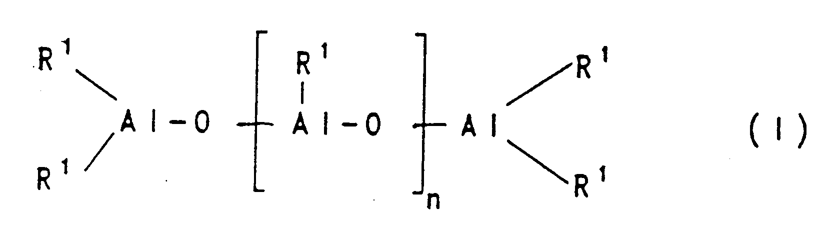 pour le type linéaire et/ou de formule (II) 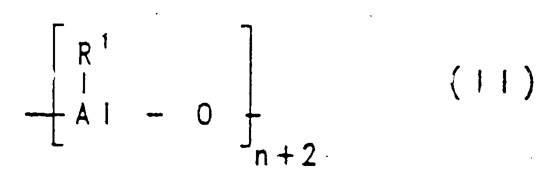 pour le type cyclique, dans les formules (I) et (II), R¹ signifiant un groupe méthyle ou un atome d'hydrogène et n étant un nombre entier compris entre 2 et 50, 0,01 à 40 % des restes R¹ étant des atomes d'hydrogène.

3. Procédé de préparation d'une polyoléfine par polymérisation d'une oléfine de formule R^{a}-CH=CH-R^{b}, dans laquelle R^{a} et R^{b} sont identiques ou différents et signifient un atome d'hydrogène ou un reste alkyle en C₁-C₁₄ ou R^{a} et R^{b} forment un cycle ayant de 4 à 28 atomes de carbone avec l'atome de carbone auquel ils sont liés, à une température comprise entre 0°C et 150°C, sous une pression comprise entre 0,5 et 100 bars, en solution, en suspension ou en phase gazeuse, en présence d'un catalyseur, lequel est formé d'un métallocène et d'un aluminoxane, **caractérisé** en ce que l'aluminoxane est obtenu par hydrolyse d'un hydrure de dialkylaluminium.
